# EUROPEAN PATENT APPLICATION

(11) **EP 2 683 138 A1**
(43) Date of publication of application: **08.01.2014**
(21) Application number: 12823122.2
(22) Date of filing: 19.10.2012
(51) Int. Cl.: H04L 29/12

(54) **PUBLIC NETWORK ADDRESS ALLOCATION METHOD AND DEVICE**

(30) Priority: 30.05.2012 CN 201210174333
(71) Applicant: Huawei Technologies Co., Ltd., Shenzhen, Guangdong 518129 (CN)
(72) Inventor: GUO, Yinghui, Shenzhen, Guangdong 518129 (CN)
(74) Representative: Maiwald Patentanwalts GmbH
(86) International application number: PCT/CN2012/083177
(87) International publication number: WO 2013/177891

(57) **Abstract**

An embodiment of the present invention provides a method for assigning a public network address. The method includes: receiving a first request packet sent by a private network user equipment; assigning a first public network IP address to the private network user equipment from a public network address pool when it is determined that no public network IP address is assigned to the private network user equipment; assigning a first idle port set to the private network user equipment from an idle port in a first port set that is corresponding to the first public network IP address; and when it is determined that all ports in the first idle port set are occupied, assigning a second idle port set to the private network user equipment from an idle port in a second port set that is corresponding to the first public network IP address. An embodiment of the present invention further provides an apparatus for assigning a public network address. With the technical solutions provided in the embodiments of the present invention, a probability that the private network user fails to be assigned a public network port when adding a new connection to a public network equipment is lowered.

## Description

### FIELD OF THE INVENTION

The present invention relates to the field of communications, and in particular to a method and an apparatus for assigning a public network address.

### BACKGROUND OF THE INVENTION

With the development of the Internet, Internet protocol (its full name is Internet Protocol in English, and its abbreviation is IP in English) address shortage has become an increasingly severe problem. At present, there are mainly two solutions: introduction of the Internet protocol version 6 (its full name is Internet Protocol Version 6 in English, and its abbreviation is IPv6 in English) technology and network address translation (its full name is Network Address Translation in English, and its abbreviation is NAT in English). Though the introduction of IPv6 can thoroughly solve an address exhaustion problem, currently, most content and applications are still based on the Internet protocol version 4 (its full name is Internet Protocol Version 4 in English, and its abbreviation is IPv4 in English) and if they are forcibly and completely switched to the IPv6, a risk that cannot be borne by an existing service may be encountered. During a relatively long term evolution process from the IPv4 to the IPv6, a NAT technology is a main solution selected to solve the IP address shortage problem in consideration of user experience, technology maturity, deployment difficulty, and the like.

In the NAT technology, a most typical address translation method is a network address and port translation (its full name is Network Address and Port Translation in English, and its abbreviation is NAPT in English) method. Specifically, the method is as follows: On a local area network, each private network user equipment occupies one internal address and one internal port number, where the internal address is a private network address and the internal port number is a private network port number; and when a private network user equipment needs to communicate with an external network, a NAT equipment translates the private network address and the private network port number to an idle external address and an external port number, where the idle external address is a public network address and the external port number is a public network port number, thereby implementing normal communication between the private network user equipment on the local area network and the external network. Therefore, by using the NAT technology, multiple equipments may be enabled to share one public network address, thereby solving a public IP address shortage problem in a better way. However, by using this method, each time when a connection is established between a private network user equipment and an external network equipment, a NAT equipment applies for a new public network port for the private network user equipment, thereby resulting in a low connection rate. Furthermore, the NAT equipment needs to record usage of each port, which is assigned to the private network user equipment, in a log, thereby resulting in complicated management. The established connection between the private network user equipment and the external network equipment may be established by using a transmission control protocol (its full name is Transmission Control Protocol in English, and its abbreviation is TCP in English), may also be established by using a secure sockets layer (its full name is Secure Sockets Layer in English, and its abbreviation is SSL in English) protocol, may also be established by using a transport layer security (its full name is Transport Layer Security in English, and its abbreviation is TLS in English) protocol, and may also be established by using a user datagram protocol (its full name is User Datagram Protocol in English, and its abbreviation is UDP in English).

To solve the foregoing problems, the prior art further provides a method for assigning an address according to a port range (Port-range). Specifically, when a private network user equipment communicates with an external network by establishing a connection, a NAT equipment selects an idle public network address and a public network port block, and assigns them to the private network user equipment, where the public network port block is formed by consecutive idle ports among public network ports that are corresponding to the public network address. During communication, if the private network user equipment occupies all ports in the public network port block that is assigned to the private network user equipment and still requires a public network port, applies for a public network port block again. However, because the same private network user equipment must use the same public network address, when no idle port is available for assignment among public network ports that are corresponding to the public network address, that is, all public network ports that are corresponding to the public network address have been assigned, the private network user equipment fails to apply for a public network port. As a result, the private network user equipment cannot establish a new connection to an external network equipment.

### SUMMARY OF THE INVENTION

Embodiments of the present invention provide a method and an apparatus for assigning a public network address, so as to decrease a probability that a private network user equipment fails to be assigned a public network port when establishing a newly added connection to a public network equipment after a public network IP address is assigned to the private network user equipment.

According to one aspect of the embodiments of the present invention, a method for assigning a public network address includes:
receiving a first request packet sent by a private network user equipment, where the first request packet is used to establish a connection between the private network user equipment and a network equipment that is on a public network;
assigning a first public network IP address to the private network user equipment from a public network address pool when it is determined that no public network IP address is assigned to the private network user equipment, where ports that are corresponding to the first public network IP address are classified into a first port set and a second port set, the second port set includes at least one port, and an idle port exists in the first port set that is corresponding to the first public network IP address; and assigning a first idle port set to the private network user equipment from the idle port in the first port set that is corresponding to the first public network IP address, where the first idle port set includes at least one port; and
when it is determined that all ports in the first idle port set are occupied and an idle port exists in the second port set that is corresponding to the first public network IP address, assigning a second idle port set to the private network user equipment from the idle port in the second port set that is corresponding to the first public network IP address, where the second idle port set includes at least one port.

According to another aspect of the embodiments of the present invention, a method for assigning a public network address includes:
receiving a first request packet sent by a private network user equipment, where the first request packet is used to establish a connection between the private network user equipment and a network equipment that is on a public network;
assigning a first public network IP address to the private network user equipment from a public network address pool when it is determined that no public network IP address is assigned to the private network user equipment; assigning a first idle port set to the private network user equipment from an idle port that is corresponding to the first public network IP address, where the first idle port set includes at least one port; and saving the port in the first idle port set to a first port set that is corresponding to the first public network IP address and the number of ports in the first port set is not greater than a first threshold value; and
assigning a second idle port set to the private network user equipment when it is determined that all ports saved from the first idle port set to the first port set are occupied and an idle port exists among ports that are corresponding to the first public network IP address, where the second idle port set includes at least one port; and saving the port in the second idle port set to a second port set that is corresponding to the first public network IP address, the number of ports in the second port set is not greater than a second threshold value, and a sum of the first threshold value and the second threshold value is not greater than the number of all ports that are corresponding to the first public network IP address.

According to another aspect of the embodiments of the present invention, an apparatus for assigning a public network address includes:
a first receiving unit, configured to receive a first request packet sent by a private network user equipment, where the first request packet is used to establish a connection between the private network user equipment and a network equipment that is on a public network;
a first assigning unit, configured to assign a first public network IP address to the private network user equipment from a public network address pool when it is determined that no public network IP address is assigned to the private network user equipment, where ports that are corresponding to the first public network IP address are classified into a first port set and a second port set, the second port set includes at least one port, and an idle port exists in the first port set that is corresponding to the first public network IP address; and assign a first idle port set to the private network user equipment from the idle port in the first port set that is corresponding to the first public network IP address, where the first idle port set includes at least one port; and
a second assigning unit, configured to, when it is determined that all ports in the first idle port set are occupied and an idle port exists in the second port set that is corresponding to the first public network IP address, assign a second idle port set to the private network user equipment from the idle port in the second port set that is corresponding to the first public network IP address, where the second idle port set includes at least one port.

According to another aspect of the embodiments of the present invention, an apparatus for assigning a public network address includes:
a third receiving unit, configured to receive a first request packet sent by a private network user equipment, where the first request packet is used to establish a connection between the private network user equipment and a network equipment that is on a public network;
a fourth assigning unit, configured to assign a first public network IP address to the private network user equipment from a public network address pool when it is determined that no public network IP address is assigned to the private network user equipment; assign a first idle port set to the private network user equipment from an idle port that is corresponding to the first public network IP address, where the first idle port set includes at least one port; and save the port in the first idle port set to a first port set that is corresponding to the first public network IP address and the number of ports in the first port set is not greater than a first threshold value; and
a fifth assigning unit, configured to assign a second idle port set to the private network user equipment when it is determined that all ports saved from the first idle port set to the first port set are occupied and an idle port exists among ports that is corresponding to the first public network IP address, where the second idle port set includes at least one port; and save the port in the second idle port set to a second port set that is corresponding to the first public network IP address, the number of ports in the second port set is not greater than a second threshold value, and a sum of the first threshold value and the second threshold value is not greater than the number of all ports that are corresponding to the first public network IP address.

According to a method and an apparatus for assigning a public network address provided in one aspect of the embodiments of the present invention, ports that are corresponding to a public network IP address are classified into a first port set and a second port set. After a public network IP address is assigned to a private network equipment that applies for a public network IP address for the first time, a port is assigned to the private network equipment from a first port set of the assigned public network IP address. When a newly added connection is established between the private network equipment and a public network equipment, a port from a second port set of the assigned public network IP address is assigned to the private network equipment. In this way, the second port set of the assigned public network IP address is reserved and is used for port assignment that is performed when a new connection is added between the private network equipment and the public network equipment, so that a probability that the private network user fails to be assigned a public network port when adding a new connection to the public network equipment is lowered.

According to a method and an apparatus for assigning a public network address provided in another aspect of the embodiments of the present invention, the number of ports, which are among ports of a public network IP address and assigned to a private network equipment that applies for a public network IP address for the first time, is limited within a first threshold value. Furthermore, ports whose number is equivalent to a second threshold value are reserved among the ports of the public network IP address and are used for port assignment that is performed when a new connection is added between the private network equipment and a public network equipment, so that when a newly added connection is established between the private network equipment and the public network equipment, a probability that the private network user fails to be assigned a public network port when adding a new connection to the public network equipment is lowered.

### BRIEF DESCRIPTION OF THE DRAWINGS

To describe the technical solutions in the embodiment of the present invention or in the prior art more clearly, the accompanying drawings required for describing the embodiment or the prior art are briefly introduced in the following. Apparently, the accompanying drawings in the following description show merely some embodiment of the present invention, and persons of ordinary skill in the art may still derive other drawings from these accompanying drawings without creative efforts.
FIG. 1 is a first schematic flowchart of a method for assigning a public network address according to an embodiment of the present invention;
FIG. 2 is a schematic structural diagram of a public network IP address and its corresponding port according to an embodiment of the present invention;
FIG. 3 is a second schematic flowchart of a method for assigning a public network address according to an embodiment of the present invention;
FIG. 4 is a third schematic flowchart of a method for assigning a public network address according to an embodiment of the present invention;
FIG. 5 is a fourth schematic flowchart of a method for assigning a public network address according to an embodiment of the present invention;
FIG. 6 is a fifth schematic flowchart of a method for assigning a public network address according to an embodiment of the present invention;
FIG. 7 is a first schematic structural diagram of an apparatus for assigning a public network address according to an embodiment of the present invention;
FIG. 8 is a second schematic structural diagram of an apparatus for assigning a public network address according to an embodiment of the present invention;
FIG. 9 is a third schematic structural diagram of an apparatus for assigning a public network address according to an embodiment of the present invention; and
FIG. 10 is a fourth schematic structural diagram of an apparatus for assigning a public network address according to an embodiment of the present invention.

### DETAILED DESCRIPTION OF THE EMBODIMENTS

The technical solutions in the embodiments of the present invention are clearly and completely described in the following with reference to the accompanying drawings in the embodiments of the present invention. Apparently, the embodiment to be described is merely a part rather than all of the embodiments of the present invention. All other embodiments obtained by persons of ordinary skill in the art based on the embodiments of the present invention without creative efforts shall fall within the protection scope of the present invention.

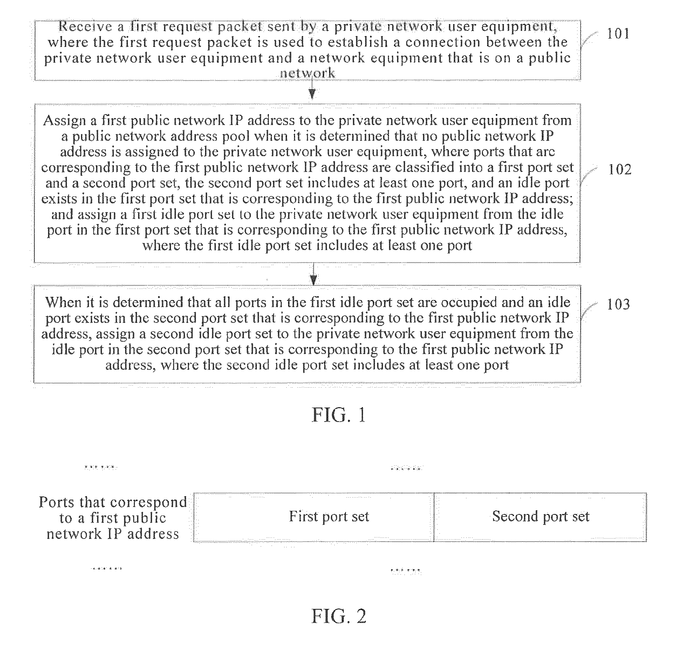

As shown in FIG. 1, an embodiment of the present invention provides a method for assigning a public network address, where the method includes the following content.

101. Receive a first request packet sent by a private network user equipment, where the first request packet is used to establish a connection between the private network user equipment and a network equipment that is on a public network.

The connection may be a TCP connection, a UDP connection, an SSL connection, or a TSL connection. Correspondingly, the first request packet may be a TCP connection establishment request packet, a UDP connection establishment request packet, an SSL connection establishment request packet, or a TSL connection establishment request packet, which is not specifically limited in this embodiment of the present invention.

102. Assign a first public network IP address to the private network user equipment from a public network address pool when it is determined that no public network IP address is assigned to the private network user equipment, where ports that are corresponding to the first public network IP address are classified into a first port set and a second port set, the second port set includes at least one port, and an idle port exists in the first port set that is corresponding to the first public network IP address; and assign a first idle port set to the private network user equipment from the idle port in the first port set that is corresponding to the first public network IP address, where the first idle port set includes at least one port.

The first port set that is corresponding to the first public network IP address is a port set used to assign a port to a private network user equipment that has not been assigned any public network IP address. The second port set that is corresponding to the first public network IP address is a port set used to reassign a port to a private network user equipment that has been assigned a public network IP address. A structural diagram of ports that are corresponding to the first public network IP address is shown in FIG. 2.

Exemplarily, 10.0.0.1:4567 is used as a private network IP address and a private network port number and 128.0.0.1 is used as a first public network IP address in this embodiment of the present invention to clearly describe the method for assigning a public network address provided in this embodiment of the present invention. For example, ports that are ranging from 0 to 65535 and are corresponding to the first public network IP address 128.0.0.1 are classified into a first port set and a second port set, where ports in the first port set that is corresponding to the IP address 128.0.0.1 range from 0 to 50000 and ports in the second port set that is corresponding to the IP address 128.0.0.1 range from 50001 to 65535. When a first request packet sent by a private network user equipment is received, the first request packet carries a private network IP address 10.0.0.1, and it is determined, according to the private network IP address 10.0.0.1, that no public network IP address is assigned to the private network user equipment, the first public network IP address 128.0.0.1 is assigned to the private network user equipment from a public network address pool, and a first idle port set is assigned to the private network user equipment from an idle port in the first port set that is corresponding to the first public network IP address 128.0.0.1, where the first idle port set includes at least one port, for example, ports in the first idle port set range from 3812 to 4812.

Specifically, a method for determining that no public network IP address is assigned to the private network user equipment may be: searching a database that stores a private network user list, where an IP address and a public network port of a private network user that has been assigned a public network IP address are stored in information of the private network user list, and when a private network user list that stores a private network IP address of the private network user equipment is not found by searching the database, determining that no public network IP address is assigned to the private network user equipment.

103. When it is determined that all ports in the first idle port set are occupied and an idle port exists in the second port set that is corresponding to the first public network IP address, assign a second idle port set to the private network user equipment from the idle port in the second port set that is corresponding to the first public network IP address, where the second idle port set includes at least one port.

Each time when the private network user equipment connects to the network equipment on the public network for one service, that is, each time when a connection to the network equipment on the public network is established, a port in the first idle port set is used. All ports in the first idle port set are occupied, which indicates that all ports in the first idle port set are used by the private network user equipment.

Exemplarily, when it is determined that all ports ranging from 3812 to 4812 in the first idle port set are occupied and an idle port exists in the second port set that is corresponding to the first public network IP address 128.0.0.1, a second idle port set, such as one with ports ranging from 50678 to 60678, is assigned to the private network user equipment from the idle port in the second port set that is corresponding to the first public network IP address 128.0.0.1.

Optionally, before it is determined that all ports in the first idle port set are occupied, the method further includes: receiving a second request packet sent by the private network user equipment, and triggering detection on occupancy conditions of all ports in the first idle port set, where the second request packet is used to establish a connection between the private network user equipment and the network equipment that is on the public network; or starting a detection timer, and when the detection timer expires, triggering detection on occupancy conditions of all ports in the first idle port set.

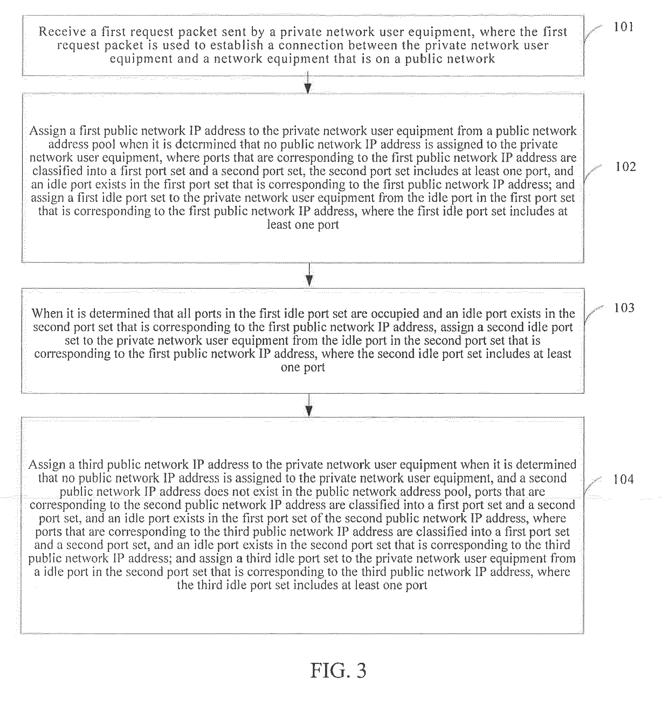

Further, as shown in FIG. 3, the method further includes:
104. Assign a third public network IP address to the private network user equipment when it is determined that no public network IP address is assigned to the private network user equipment, and a second public network IP address does not exist in the public network address pool, ports that are corresponding to the second public network IP address are classified into a first port set and a second port set, and an idle port exists in the first port set of the second public network IP address, where ports that are corresponding to the third public network IP address are classified into a first port set and a second port set, and an idle port exists in the second port set that is corresponding to the third public network IP address; and assign a third idle port set to the private network user equipment from a idle port in the second port set that is corresponding to the third public network IP address, where the third idle port set includes at least one port.

When an idle port exists in the second port set that is corresponding to the first public network IP address, the third public network IP address may also be the first public network IP address. When an idle port exists in the second port set that is corresponding to the second public network IP address, the third public network IP address may also be the second public network IP address.

Benefits of such implementation are as follows: When another private network user equipment needs to apply for a public network IP address and at this time, if no idle port exists in first port sets that are corresponding to all public network IP addresses in the public network address pool, one public network IP address is assigned to the another private network user equipment, where an idle port exists in a second port set of the assigned public network IP address; furthermore, a public network port is assigned to the another private network user equipment from the second port set of the assigned public network IP address, and in this way, it can be ensured that a private network user equipment is assigned a public network IP address and a port in time and that communication is established in time between the private network user equipment and a network equipment that is on a public network.

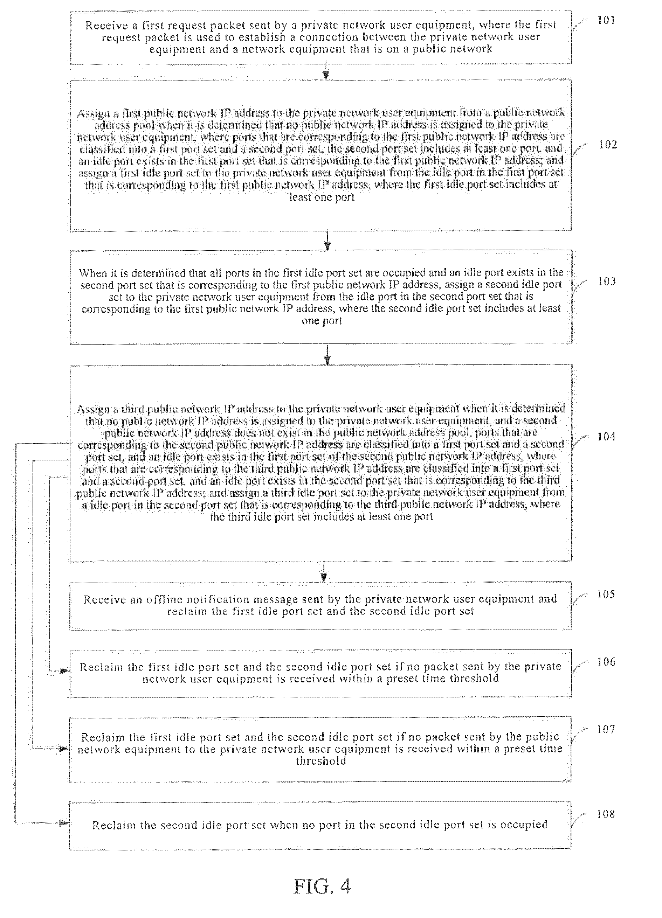

Optionally, as shown in FIG. 4, the method further includes:
105. Receive an offline notification message sent by the private network user equipment and reclaim the first idle port set and the second idle port set.

Specifically, when the private network user equipment does not need public network address and public network port resources any more, the private network user equipment sends an offline notification message that carries a private network IP address. After the offline notification is received, a public network IP address and a public network port that are assigned to the private network user equipment are released, so that the public network IP address resource can be reassigned to another private network user equipment. In this way, the public network IP address is fully used, and a resource is saved. The reclaiming of the first idle port set and the second idle port set indicates that an occupancy flag of a port in the first idle port set and that in the second idle port set are cleared, so that the ports can be reassigned to another private network user equipment. When the third idle port set is assigned to the private network user equipment, the third idle port set further needs to be reclaimed.

Optionally, as shown in FIG. 4, the method further includes:
106. Reclaim the first idle port set and the second idle port set if no packet sent by the private network user equipment is received within a preset time threshold.

Exemplarily, if no packet that carries the private network IP address 10.0.0.1 is received within a preset time threshold, the public network IP address and the public network port that are assigned to the private network user equipment are released, so that the public network IP address resource can be reassigned to another private network user equipment. In this way, the public network IP address is fully used, and a resource is saved. The reclaiming of the first idle port set and the second idle port set indicates that an occupancy flag of a port in the first idle port set and that in the second idle port set are cleared, so that the ports can be reassigned to another private network user equipment. When the third idle port set is assigned to the private network user equipment, the third idle port set further needs to be reclaimed.

Optionally, as shown in FIG. 4, the method further includes:
107. Reclaim the first idle port set and the second idle port set if no packet sent by a public network equipment to the private network user equipment is received within a preset time threshold.

Exemplarily, if no packet sent to the private network IP address 10.0.0.1 is received within a preset time threshold, the public network IP address and the public network port that are assigned to the private network user equipment are released, so that the public network IP address resource can be reassigned to another private network user equipment. In this way, the public network IP address is fully used, and a resource is saved. The reclaiming of the first idle port set and the second idle port set indicates that an occupancy flag of a port in the first idle port set and that in the second idle port set are cleared, so that the ports can be reassigned to another private network user equipment. When the third idle port set is assigned to the private network user equipment, the third idle port set further needs to be reclaimed.

Optionally, as shown in FIG. 4, the method further includes:
108. Reclaim the second idle port set when no port in the second idle port set is occupied.

The reclaiming of a port in the second idle port set may be performed without waiting for an offline notification sent by the private network user. The port in the second idle port set can be reclaimed as long as it is determined that no port in the second idle port set is occupied. In this way, the reclaiming of an idle port in the second idle port set can be accelerated, thereby further improving a utilization ratio of a port in the second port set that is corresponding to the first public network IP address, and increasing a probability that the private network user equipment applies for a port from the second port set that is corresponding to the first public network IP address, when a new connection is added between the private network user equipment and the network equipment that is on the public network.

It can be seen that, with the method for assigning a public network address provided in this embodiment of the present invention, ports that are corresponding to a public network IP address are classified into a first port set and a second port set. After a public network IP address is assigned to a private network equipment that applies for a public network IP address for the first time, a port is assigned to the private network equipment from a first port set of the assigned public network IP address. When a newly added connection is established between the private network equipment and a public network equipment, a port from a second port set of the assigned public network IP address is assigned to the private network equipment. In this way, the second port set of the assigned public network IP address is reserved and is used for port assignment that is performed when a new connection is added between the private network equipment and the public network equipment, so that a probability that the private network user fails to be assigned a public network port when adding a new connection to the public network equipment is lowered.

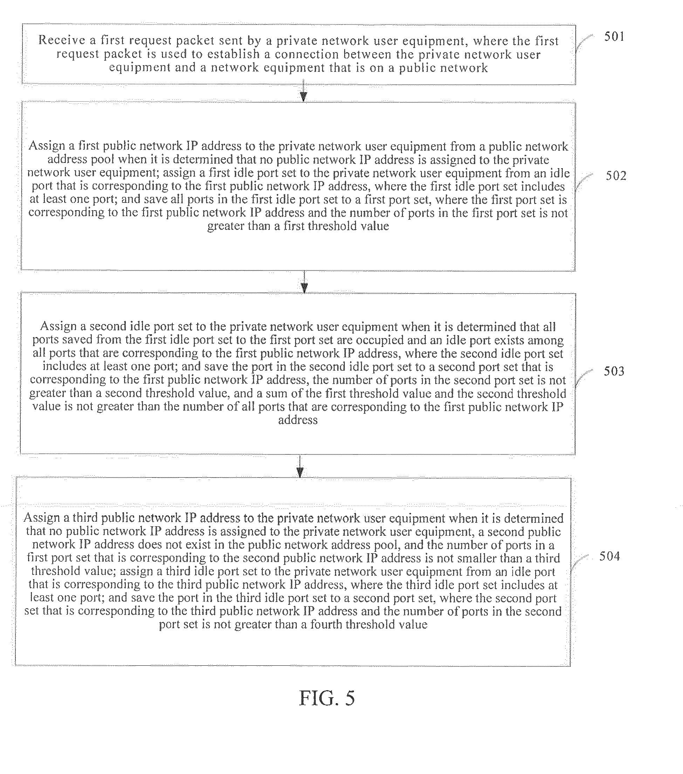

As shown in FIG. 5, an embodiment of the present invention provides another method for assigning a public network address, where the method includes the following content.

501. Receive a first request packet sent by a private network user equipment, where the first request packet is used to establish a connection between the private network user equipment and a network equipment that is on a public network.

The connection may be a TCP connection, a UDP connection, an SSL connection, or a TSL connection. Correspondingly, the first request packet may be a TCP connection establishment request packet, a UDP connection establishment request packet, an SSL connection establishment request packet, or a TSL connection establishment request packet, which is not specifically limited in this embodiment of the present invention.

502. Assign a first public network IP address to the private network user equipment from a public network address pool when it is determined that no public network IP address is assigned to the private network user equipment; assign a first idle port set to the private network user equipment from an idle port that is corresponding to the first public network IP address, where the first idle port set includes at least one port; and save all ports in the first idle port set to a first port set, where the first port set is corresponding to the first public network IP address and the number of ports in the first port set is not greater than a first threshold value.

Exemplarily, 10.0.0.1:4567 is used as a private network IP address and a private network port number and 128.0.0.1 is used as a first public network IP address in this embodiment of the present invention to clearly describe the method for assigning a public network address provided in this embodiment of the present invention. Exemplarily, after it is determined, according to the private network IP address 10.0.0.1, that no public network IP address is assigned to the private network user equipment, a first public network IP address 128.0.0.1 is assigned to the private network user equipment from a public network address pool, and a first idle port set is assigned to the private network user equipment from an idle port that is corresponding to the first public network IP address 128.0.0.1. For example, a port in the first idle port set ranges from 3812 to 4812. The port in the first idle port set is saved to a first port set, where the number of ports in the first port set is not greater than a first threshold value. That is, if a public network IP address needs to be assigned to the private network IP address 10.0.0.1, before a public network IP address is assigned to the private network user equipment, it needs to be determined that the number of ports in the first port set that is corresponding to the public network IP address is not greater than the first threshold value, where a port saved in the first port set is a port that is assigned to the private network user equipment that has not been assigned any public network IP address.

Specifically, a method for determining that no public network IP address is assigned to the private network user equipment may be: searching a database that stores a private network user list, where an IP address and a public network port of a private network user that has been assigned a public network IP address are stored in information of the private network user list, and when a private network user list that stores a private network IP address of the private network user equipment is not found by searching the database, determining that no public network IP address is assigned to the private network user equipment.

503. Assign a second idle port set to the private network user equipment when it is determined that all ports saved from the first idle port set to the first port set are occupied and an idle port exists among all ports that are corresponding to the first public network IP address, where the second idle port set includes at least one port; and save the port in the second idle port set to a second port set that is corresponding to the first public network IP address, the number of ports in the second port set is not greater than a second threshold value, and a sum of the first threshold value and the second threshold value is not greater than the number of all ports that are corresponding to the first public network IP address.

The first threshold value is used to limit the maximum number of ports in the first port set that is corresponding to the first public network IP address and the second threshold value is used to limit the maximum number of ports in the second port set that is corresponding to the first public network IP address. Exemplarily, when it is determined that all ports that are ranging from 3812 to 4812 in the first idle port set and are saved to the first port set are occupied and an idle port exists among ports that are corresponding to the first public network IP address, a second idle port set, such as one with ports ranging from 50678 to 60678, is assigned to the private network user equipment, where the second idle port set includes at least one port. The port in the second idle port set is saved to the second port set that is corresponding to the first public network IP address and the number of ports in the second port set is not greater than the second threshold value. That is, if a port that is corresponding to the first network IP address needs to be reassigned to the private network user equipment, it needs to be determined that the number of ports in the second port set that is corresponding to the first public network IP address is not greater than the second threshold value, and then the second idle port is assigned to the private network user equipment from an idle port that is corresponding to the first public network IP address, where the sum of the first threshold value and the second threshold value is not greater than the number of all ports that are corresponding to the first public network IP address.

Optionally, before it is determined that all ports in the first idle port set are occupied, the method further includes: receiving a second request packet sent by the private network user equipment, triggering detection on occupancy conditions of all ports in the first idle port set, where the second request packet is used to establish a connection between the private network user equipment and the network equipment that is on the public network; or starting a detection timer, and when the detection timer expires, triggering detection on occupancy conditions of all ports in the first idle port set.

Further, as shown in FIG. 5, the method further includes:
504. Assign a third public network IP address to the private network user equipment when it is determined that no public network IP address is assigned to the private network user equipment, a second public network IP address does not exist in the public network address pool, and the number of ports in a first port set that is corresponding to the second public network IP address is smaller than a third threshold value; assign a third idle port set to the private network user equipment from an idle port that is corresponding to the third public network IP address, where the third idle port set includes at least one port; and save the port in the third idle port set to a second port set, where the second port set that is corresponding to the third public network IP address and the number of ports in the second port set is not greater than a fourth threshold value.

The third threshold value is used to limit the maximum number of ports in the first port set that is corresponding to the second public network IP address and the fourth threshold value is used to limit the maximum number of ports in the second port set that is corresponding to the third public network IP address.

Benefits of such implementation are as follows: When another private network user equipment needs to apply for a public network IP address and at this time, if the number of ports in a first port set that is corresponding to each public network IP address in the public network address pool reaches a threshold value, one public network IP address is assigned to the another private network user equipment, where an idle port of the assigned public network IP address exists and the number of ports in a second port set of the assigned public network IP address does not reach the threshold value; furthermore, a public network port is assigned to the another private network user equipment from the idle port of the assigned public network IP address, and in this way, it can be ensured that a private network user equipment is assigned a public network IP address and a port in time and that communication is established in time between the private network user equipment and a network equipment that is on a public network.

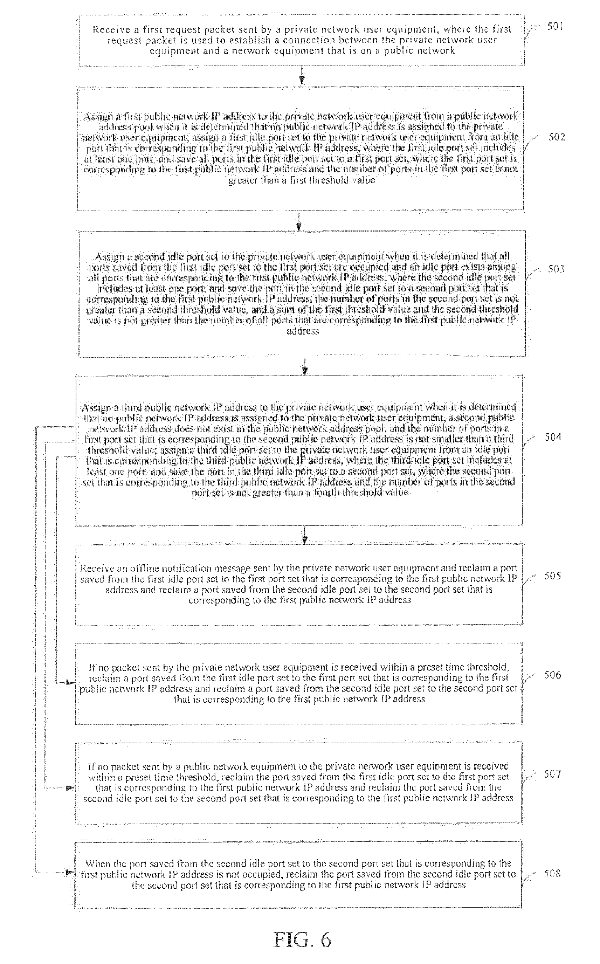

Optionally, as shown in FIG. 6, the method further includes:
505. Receive an offline notification message sent by the private network user equipment and reclaim a port saved from the first idle port set to the first port set that is corresponding to the first public network IP address and reclaim a port saved from the second idle port set to the second port set that is corresponding to the first public network IP address.

Specifically, when the private network user equipment does not need public network address and public network port resources any more, the private network user equipment sends an offline notification message that carries a private network IP address. After the offline notification is received, a public network IP address and a public network port that are assigned to the private network user equipment are released, so that the public network IP address resource can be reassigned to another private network user equipment. In this way, the public network IP address is fully used, and a resource is saved.

Optionally, as shown in FIG. 6, the method further includes:
506. If no packet sent by the private network user equipment is received within a preset time threshold, reclaim a port saved from the first idle port set to the first port set that is corresponding to the first public network IP address and reclaim a port saved from the second idle port set to the second port set that is corresponding to the first public network IP address.

Exemplarily, if no packet that carries the private network IP address 10.0.0.1 is received within a preset time threshold, the port saved from the first idle port set to the first port set that is corresponding to the first public network IP address and the port saved from the second idle port set to the second port set that is corresponding to the first public network IP address are reclaimed. When the third idle port set is assigned to the private network user equipment, a port saved from the third idle port set to the second port set that is corresponding to the third public network IP address further needs to be reclaimed. In this way, a public network IP address and a port that is corresponding to the public network IP address are fully used, and a resource utilization ratio is improved.

Optionally, as shown in FIG. 6, the method further includes:
507. If no packet sent by a public network equipment to the private network user equipment is received within a preset time threshold, reclaim the port saved from the first idle port set to the first port set that is corresponding to the first public network IP address and reclaim the port saved from the second idle port set to the second port set that is corresponding to the first public network IP address.

Exemplarily, if no packet sent by a public network equipment to the private network user equipment is received within a preset time threshold, that is, no packet that carries the private network address 10.0.0.1 is sent, the port saved from the first idle port set to the first port set that is corresponding to the first public network IP address and the port saved from the second idle port set to the second port set that is corresponding to the first public network IP address are reclaimed. When the third idle port set is assigned to the private network user equipment, the port saved from the third idle port set to the second port set that is corresponding to the third public network IP address further needs to be reclaimed. In this way, a public network IP address and a port that is corresponding to the public network IP address are fully used, and a resource utilization ratio is improved.

Optionally, as shown in FIG. 6, the method further includes:
508. When the port saved from the second idle port set to the second port set that is corresponding to the first public network IP address is not occupied, reclaim the port saved from the second idle port set to the second port set that is corresponding to the first public network IP address.

The reclaiming of the port saved from the second idle port set to the second port set that is corresponding to the first public network IP address may be performed without waiting for an offline notification sent by the private network user. The port saved from the second idle port set to the second port set that is corresponding to the first public network IP address can be reclaimed as long as it is determined that the port saved from the second idle port set to the second port set that is corresponding to the first public network IP address is not occupied. In this way, the reclaiming of the port saved from the second idle port set to the second port set that is corresponding to the first public network IP address can be accelerated, thereby further improving a utilization ratio of a port of the first public network IP address, and increasing a probability that when a new connection is added between the private network user equipment and the network equipment that is on the public network, the private network user equipment applies for a port from a port set that is corresponding to the first public network IP address.

It can be seen that, with the method for assigning a public network address provided in this embodiment of the present invention, the number of ports, which are among ports of a public network IP address and assigned to a private network equipment that applies for a public network IP address for the first time, is limited within a first threshold value. Furthermore, ports whose number is equivalent to a second threshold value are reserved among the ports of the public network IP address and are used for port assignment that is performed when a new connection is added between the private network equipment and a public network equipment, so that when a newly added connection is established between the private network equipment and the public network equipment, a probability that the private network user fails to be assigned a public network port when adding a new connection to the public network equipment is lowered.

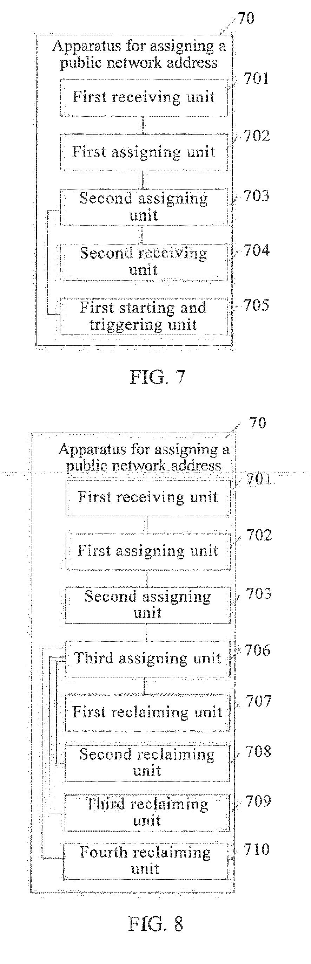

As shown in FIG. 7, an embodiment of the present invention provides an apparatus 70 for assigning a public network address. The apparatus 70 includes:
a first receiving unit 701, configured to receive a first request packet sent by a private network user equipment, where the first request packet is used to establish a connection between the private network user equipment and a network equipment that is on a public network;
a first assigning unit 702, configured to assign a first public network IP address to the private network user equipment from a public network address pool when it is determined that no public network IP address is assigned to the private network user equipment, where ports that are corresponding to the first public network IP address are classified into a first port set and a second port set, the second port set includes at least one port, and an idle port exists in the first port set that is corresponding to the first public network IP address; and assign a first idle port set to the private network user equipment from the idle port in the first port set that is corresponding to the first public network IP address, where the first idle port set includes at least one port; and
a second assigning unit 703, configured to, when it is determined that all ports in the first idle port set are occupied and an idle port exists in the second port set that is corresponding to the first public network IP address, assign a second idle port set to the private network user equipment from the idle port in the second port set that is corresponding to the first public network IP address, where the second idle port set includes at least one port.

The connection may be a TCP connection, a UDP connection, an SSL connection, or a TSL connection. Correspondingly, the first request packet may be a TCP connection establishment request packet, a UDP connection establishment request packet, an SSL connection establishment request packet, or a TSL connection establishment request packet, which is not specifically limited in this embodiment of the present invention.

The first port set that is corresponding to the first public network IP address is a port set used to assign a port to a private network user equipment that has not been assigned any public network IP address. The second port set that is corresponding to the first public network IP address is a port set used to reassign a port to a private network user equipment that has been assigned a public network IP address. A structural diagram of ports that are corresponding to the first public network IP address is shown in FIG. 2. Exemplarily, 10.0.0.1:4567 is used as a private network IP address and a private network port number and 128.0.0.1 is used as a first public network IP address in this embodiment of the present invention to clearly describe the apparatus for assigning a public network address provided in this embodiment of the present invention. For example, ports that are ranging from 0 to 65535 and are corresponding to the first public network IP address 128.0.0.1 are classified into a first port set and a second port set, where ports in the first port set that is corresponding to the IP address 128.0.0.1 range from 0 to 50000 and ports in the second port set that is corresponding to the IP address 128.0.0.1 range from 50001 to 65535. When the first receiving unit 701 receives a first request packet sent by a private network user equipment, the first request packet carries a private network IP address 10.0.0.1, and the first assigning unit 702 determines, according to the private network IP address 10.0.0.1, that no public network IP address is assigned to the private network user equipment, the first public network IP address 128.0.0.1 is assigned to the private network user equipment from a public network address pool, and a first idle port set is assigned to the private network user equipment from an idle port in the first port set that is corresponding to the first public network IP address 128.0.0.1, where the first idle port set includes at least one port, for example, ports in the first idle port set range from 3812 to 4812.

Specifically, a method for determining that no public network IP address is assigned to the private network user equipment may be: searching a database that stores a private network user list, where an IP address and a public network port of a private network user that has been assigned a public network IP address are stored in information of the private network user list, and when a private network user list that stores a private network IP address of the private network user equipment is not found by searching the database, determining that no public network IP address is assigned to the private network user equipment.

Each time when the private network user equipment connects to the network equipment on the public network for one service, that is, each time when a connection to the network equipment on the public network is established, a port in the first idle port set is used. All ports in the first idle port set are occupied, which indicates that all ports in the first idle port set are used by the private network user equipment.

Exemplarily, when the second assigning unit 703 determines that all ports ranging from 3812 to 4812 in the first idle port set are occupied and an idle port exists in the second port set that is corresponding to the first public network IP address 128.0.0.1, a second idle port set, such as one with ports ranging from 50678 to 60678, is assigned to the private network user equipment from the idle port in the second port set that is corresponding to the first public network IP address 128.0.0.1.

Further, to determine whether all ports in the first idle port set are occupied, as shown in FIG. 7, the apparatus 70 further includes:
a second receiving unit 704, configured to receive a second request packet sent by the private network user equipment and trigger detection on occupancy conditions of all ports in the first idle port set, where the second request packet is used to establish a connection between the private network user equipment and the network equipment that is on the public network.

Alternatively, as shown in FIG. 7, the apparatus further includes:
a first starting and triggering unit 705, configured to start a detection timer, and when the detection timer expires, trigger detection on occupancy conditions of all ports in the first idle port set.

Further, as shown in FIG. 8, the apparatus 70 further includes:
a third assigning unit 706, configured to assign a third public network IP address to the private network user equipment when it is determined that no public network IP address is assigned to the private network user equipment, a second public network IP address does not exist in the public network address pool, ports that are corresponding to the second public network IP address are classified into a first port set and a second port set, and an idle port exists in the first port set that is corresponding to the second public network IP address, where ports that are corresponding to the third public network IP address are classified into a first port set and a second port set, and an idle port exists in the second port set that is corresponding to the third public network IP address; and assign a third idle port set to the private network user equipment from the idle port in the second port set that is corresponding to the third public network IP address, where the third idle port set includes at least one port.

When an idle port exists in the second port set that is corresponding to the first public network IP address, the third public network IP address may also be the first public network IP address. When an idle port exists in the second port set that is corresponding to the second public network IP address, the third public network IP address may also be the second public network IP address.

Benefits of such implementation are as follows: When another private network user equipment needs to apply for a public network IP address and at this time, if no idle port exists in first port sets that are corresponding to all public network IP addresses in the public network address pool, the third assigning unit 706 assigns one public network IP address to the another private network user equipment, where an idle port exists in a second port set of the assigned public network IP address; and assigns a public network port to the another private network user equipment from the second port set of the assigned public network IP address, and in this way, it can be ensured that a private network user equipment is assigned a public network IP address and a port and that communication is established in time between the private network user equipment and a network equipment that is on a public network.

Optionally, as shown in FIG. 7, the apparatus 70 further includes:
a first reclaiming unit 707, configured to receive an offline notification message sent by the private network user equipment and reclaim the first idle port set and the second idle port set.

Specifically, when the private network user equipment does not need public network address and public network port resources any more, the private network user equipment sends an offline notification message that carries a private network IP address. After the first reclaiming unit 707 receives the offline notification, a public network IP address and a public network port that are assigned to the private network user equipment are released, so that the public network IP address resource can be reassigned to another private network user equipment. In this way, the public network IP address is fully used, and a resource is saved. The reclaiming of the first idle port set and the second idle port set indicates that an occupancy flag of a port in the first idle port set and that in the second idle port set are cleared, so that the ports can be reassigned to another private network user equipment. When the third idle port set is assigned to the private network user equipment, the third idle port set further needs to be reclaimed.

Optionally, the apparatus 70 further includes:
a second reclaiming unit 708, configured to reclaim the first idle port set and the second idle port set if no packet sent by the private network user equipment is received within a preset time threshold.

Exemplarily, if the second reclaiming unit 708 does not receive, within a preset time threshold, a packet that carries the private network IP address 10.0.0.1, the public network IP address and the public network port that are assigned to the private network user equipment are released, so that the public network IP address resource can be reassigned to another private network user equipment. In this way, the public network IP address is fully used, and a resource is saved. The reclaiming of the first idle port set and the second idle port set indicates that an occupancy flag of a port in the first idle port set and that in the second idle port set are cleared, so that the ports can be reassigned to another private network user equipment. When the third idle port set is assigned to the private network user equipment, the third idle port set further needs to be reclaimed.

Optionally, the apparatus 70 further includes:
a third reclaiming unit 709, configured to reclaim the first idle port set and the second idle port set if no packet sent by a public network equipment to the private network user equipment is received within a preset time threshold.

Exemplarily, if the third reclaiming unit 709 does not receive, within a preset time threshold, a packet sent to the private network IP address 10.0.0.1, the public network IP address and the public network port that are assigned to the private network user equipment are released, so that the public network IP address resource can be reassigned to another private network user equipment. In this way, the public network IP address is fully used, and a resource is saved. The reclaiming of the first idle port set and the second idle port set indicates that an occupancy flag of a port in the first idle port set and that in the second idle port set are cleared, so that the ports can be reassigned to another private network user equipment. When the third idle port set is assigned to the private network user equipment, the third idle port set further needs to be reclaimed.

Optionally, the apparatus 70 further includes:
a fourth reclaiming unit 710, configured to reclaim the second idle port set when no port in the second idle port set is occupied.

The reclaiming of a port in the second idle port set may be performed without waiting for an offline notification sent by the private network user. The fourth reclaiming unit 710 can reclaim the port in the second idle port set as long as it is determined that no port in the second idle port set is occupied. In this way, the reclaiming of an idle port in the second idle port set can be accelerated, thereby further improving a utilization ratio of a port in the second port set that is corresponding to the first public network IP address, and increasing a probability that when a new connection is added between the private network user equipment and the network equipment that is on the public network, the private network user equipment applies for a port from the second port set that is corresponding to the first public network IP address.

Optionally, the foregoing units provided in this embodiment of the present invention may be integrated into one or multiple units. During implementation, the first receiving unit 701 and the second receiving unit 704 may be implemented by one or multiple physical interfaces, the first assigning unit 702, the second assigning unit 703, and the third assigning unit 706 may be a processor, the first starting and triggering unit 705 may be a timer, and the first reclaiming unit 707, the second reclaiming unit 708, the third reclaiming unit 709, and the fourth reclaiming unit 710 may also be a processor. The one or multiple physical interfaces and processors enable the apparatus to implement operations executed in this embodiment.

It can be seen that, with the apparatus for assigning a public network address provided in this embodiment of the present invention, ports that are corresponding to a public network IP address are classified into a first port set and a second port set. After a public network IP address is assigned to a private network equipment that applies for a public network IP address for the first time, a port is assigned to the private network equipment from a first port set of the assigned public network IP address. When a newly added connection is established between the private network equipment and a public network equipment, a port from a second port set of the assigned public network IP address is assigned to the private network equipment. In this way, the second port set of the assigned public network IP address is reserved and is used for port assignment that is performed when a new connection is added between the private network equipment and the public network equipment, so that a probability that the private network user fails to be assigned a public network port when adding a new connection to the public network equipment is lowered.

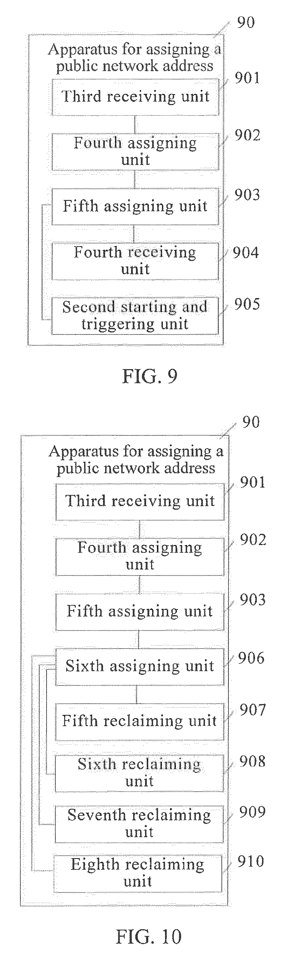

An embodiment of the present invention provides an apparatus 90 for assigning a public network address, and as shown in FIG. 9, the apparatus includes:
a third receiving unit 901, configured to receive a first request packet sent by a private network user equipment, where the first request packet is used to establish a connection between the private network user equipment and a network equipment that is on a public network;
a fourth assigning unit 902, configured to assign a first public network IP address to the private network user equipment from a public network address pool when it is determined that no public network IP address is assigned to the private network user equipment; assign a first idle port set to the private network user equipment from an idle port that is corresponding to the first public network IP address, where the first idle port set includes at least one port; and save the port in the first idle port set to a first port set that is corresponding to the first public network IP address and the number of ports in the first port set is not greater than a first threshold value; and
a fifth assigning unit 903, configured to assign a second idle port set to the private network user equipment when it is determined that all ports saved from the first idle port set to the first port set are occupied and an idle port exists among all ports that are corresponding to the first public network IP address, where the second idle port set includes at least one port; and save the port in the second idle port set to a second port set that is corresponding to the first public network IP address, the number of ports in the second port set is not greater than a second threshold value, and a sum of the first threshold value and the second threshold value is not greater than the number of all ports that are corresponding to the first public network IP address.

Exemplarily, 10.0.0.1:4567 is used as a private network IP address and a private network port number and 128.0.0.1 is used as a first public network IP address in this embodiment of the present invention to clearly describe the method for assigning a public network address provided in this embodiment of the present invention. Exemplarily, when the fourth assigning unit 902 determines, according to the private network IP address 10.0.0.1, that no public network IP address is assigned to the private network user equipment, a first public network IP address 128.0.0.1 is assigned to the private network user equipment from a public network address pool, and a first idle port set is assigned to the private network user equipment from an idle port that is corresponding to the first public network IP address 128.0.0.1. For example, a port in the first idle port set ranges from 3812 to 4812. The port in the first idle port set is saved to a first port set, where the number of ports in the first port set is not greater than a first threshold value. That is, if a public network IP address needs to be assigned to the private network IP address 10.0.0.1, before a public network IP address is assigned to the private network user equipment, it needs to be determined that the number of ports in the first port set that is corresponding to the public network IP address is not greater than the first threshold value, where a port saved in the first port set is a port that is assigned to the private network user equipment that has not been assigned any public network IP address.

Specifically, a method for the fourth assigning unit 902 to determine that no public network IP address is assigned to the private network user equipment may be: searching a database that stores a private network user list, where an IP address and a public network port of a private network user that has been assigned a public network IP address are stored in information of the private network user list, and when a private network user list that stores a private network IP address of the private network user equipment is not found by searching the database, determining that no public network IP address is assigned to the private network user equipment.

The first threshold value is used to limit the maximum number of ports in the first port set that is corresponding to the first public network IP address and the second threshold value is used to limit the maximum number of ports in the second port set that is corresponding to the first public network IP address. Exemplarily, when the fifth assigning unit 903 determines that all ports that range from 3812 to 4812 in the first idle port set and are saved to the first port set are occupied and an idle port exists among ports that are corresponding to the first public network IP address, a second idle port set, such as one with ports ranging from 50678 to 60678, is assigned to the private network user equipment, where the second idle port set includes at least one port. The port in the second idle port set is saved to the second port set that is corresponding to the first public network IP address and the number of ports in the second port set is not greater than the second threshold value. That is, if a port that is corresponding to the first network IP address needs to be reassigned to the private network user equipment, it needs to be determined that the number of ports in the second port set that is corresponding to the first public network IP address is not greater than the second threshold value, and then the second idle port is assigned to the private network user equipment from an idle port that is corresponding to the first public network IP address, where the sum of the first threshold value and the second threshold value is not greater than the number of all ports that are corresponding to the first public network IP address.

Further, to determine that all ports saved from the first idle port set to the first port set are occupied, as shown in FIG. 9, the apparatus 90 further includes:
a fourth receiving unit 904, configured to receive a second request packet sent by the private network user equipment and trigger detection on occupancy conditions of all ports saved from the first idle port set to the first port set, where the second request packet is used to establish a connection between the private network user equipment and the network equipment that is on the public network; or
a second starting and triggering unit 905, configured to start a detection timer, and when the detection timer expires, trigger detection on occupancy conditions of all ports saved from the first idle port set to the first port set.

Further, as shown in FIG. 10, the apparatus 90 further includes:
a sixth assigning unit 906, configured to assign a third public network IP address to the private network when it is determined that no public network IP address is assigned to the private network user equipment, a second public network IP address does not exist in the public network address pool, and the number of ports in a first port set that is corresponding to the second public network IP address is smaller than a third threshold value; assign a third idle port set to the private network user equipment from an idle port that is corresponding to the third public network IP address, where the third idle port set includes at least one port; and save the port in the third idle port set to a second port set, where the second port set is corresponding to the third public network IP address and the number of ports in the second port set is not greater than a fourth threshold value.

Benefits of such implementation are as follows: When another private network user equipment needs to apply for a public network IP address and at this time, if the number of ports in a first port set that is corresponding to each public network IP address in the public network address pool reaches a threshold value, the sixth assigning unit 906 assigns one public network IP address to the another private network user equipment, where an idle port of the assigned public network IP address exists and the number of ports in a second port set of the assigned public network IP address does not reach the threshold value; and assigns a public network port to the another private network user equipment from the idle port of the assigned public network IP address, and in this way, it can be ensured that a private network user equipment is assigned a public network IP address and a port in time and that communication is established in time between the private network user equipment and a network equipment that is on a public network.

Optionally, as shown in FIG. 10, the apparatus 90 further includes:
a fifth reclaiming unit 907, configured to receive an offline notification message sent by the private network user equipment and reclaim a port saved from the first idle port set to the first port set that is corresponding to the first public network IP address and reclaim a port saved from the second idle port set to the second port set that is corresponding to the first public network IP address.

Specifically, when the private network user equipment does not need public network address and public network port resources any more, the private network user equipment sends an offline notification message that carries a private network IP address. After the fifth reclaiming unit 907 receives the offline notification, a public network IP address and a public network port that are assigned to the private network user equipment are released, so that the public network IP address resource can be reassigned to another private network user equipment. In this way, the public network IP address is fully used, and a resource is saved.

Optionally, as shown in FIG. 10, the apparatus 90 further includes:
a sixth reclaiming unit 908, configured to, if no packet sent by the private network user equipment is received within a preset time threshold, reclaim a port saved from the first idle port set to the first port set that is corresponding to the first public network IP address and reclaim a port t saved from the second idle port set to the second port set that is corresponding to the first public network IP address.

Exemplarily, if the sixth reclaiming unit 908 does not receive, within the preset time threshold, a packet that carries the private network IP address 10.0.0.1, the port saved from the first idle port set to the first port set that is corresponding to the first public network IP address and the port saved from the second idle port set to the second port set that is corresponding to the first public network IP address are reclaimed. When the third idle port set is assigned to the private network user equipment, a port saved from the third idle port set to the second port set that is corresponding to the third public network IP address further needs to be reclaimed. In this way, a public network IP address and a port that is corresponding to the public network IP address are fully used, and a resource utilization ratio is improved.

Optionally, as shown in FIG. 10, the apparatus 90 further includes:
a seventh reclaiming unit 909, configured to, if no packet sent by a public network equipment to the private network user equipment is received within a preset time threshold, reclaim the port saved from the first idle port set to the first port set that is corresponding to the first public network IP address and reclaim the port saved from the second idle port set to the second port set that is corresponding to the first public network IP address.

Exemplarily, if the seventh reclaiming unit 909 does not receive, within a preset time threshold, a packet sent by a public network equipment to the private network user equipment, that is, no packet that carries the private network address 10.0.0.1 is sent, the port saved from the first idle port set to the first port set that is corresponding to the first public network IP address and the port saved from the second idle port set to the second port set that is corresponding to the first public network IP address are reclaimed. When the third idle port set is assigned to the private network user equipment, the port saved from the third idle port set to the second port set that is corresponding to the third public network IP address further needs to be reclaimed. In this way, a public network IP address and a port that is corresponding to the public network IP address are fully used, and a resource utilization ratio is improved.

Optionally, as shown in FIG. 10, the apparatus 90 further includes:
an eighth reclaiming unit 910, configured to, when the port saved from the second idle port set to the second port set that is corresponding to the first public network IP address is not occupied, reclaim the port saved from the second idle port set to the second port set that is corresponding to the first public network IP address.

The reclaiming of the port saved from the second idle port set to the second port set that is corresponding to the first public network IP address may be performed without waiting for an offline notification sent by the private network user. The port saved from the second idle port set to the second port set that is corresponding to the first public network IP address can be reclaimed as long as the eighth reclaiming unit 910 determines that the port saved from the second idle port set to the second port set that is corresponding to the first public network IP address is not occupied. In this way, the reclaiming of the port saved from the second idle port set to the second port set that is corresponding to the first public network IP address can be accelerated, thereby further improving a utilization ratio of a port of the first public network IP address, and increasing a probability that when a new connection is added between the private network user equipment and the network equipment that is on the public network, the private network user equipment applies for a port from a port set that is corresponding to the first public network IP address.

Optionally, the foregoing units provided in this embodiment of the present invention may be integrated into one or multiple units. During implementation, the third receiving unit 901 and the fourth receiving unit 904 may be implemented by one or multiple physical interfaces, the fourth assigning unit 902, the fifth assigning unit 903, and the sixth assigning unit 906 may be a processor, the second starting and triggering unit 905 may be a timer, and the fifth reclaiming unit 907, the sixth reclaiming unit 908, the seventh reclaiming unit 909, and the eighth reclaiming unit 910 may also be a processor. The one or multiple physical interfaces and processors enable the apparatus to implement operations executed in this embodiment.

It can be seen that, with the apparatus for assigning a public network address provided in this embodiment of the present invention, the number of ports, which are among ports of a public network IP address and assigned to a private network equipment that applies for a public network IP address for the first time, is limited within a first threshold value. Furthermore, ports whose number is equivalent to a second threshold value are reserved among the ports of the public network IP address and are used for port assignment that is performed when a new connection is added between the private network equipment and a public network equipment, so that when a newly added connection is established between the private network equipment and the public network equipment, a probability that the private network user fails to be assigned a public network port when adding a new connection to the public network equipment is lowered.

In all embodiments of the present invention, the apparatus for assigning a public network address may be implemented by using a router that supports a NAT function, a switch that supports a NAT function, or a carrier grade address translation (its full name is Carrier Grade NAT in English, and its abbreviation is CGN in English) equipment, or may be implemented by using another network equipment that supports a NAT function.

Persons of ordinary skills in the art may understand that all or part of steps in the foregoing method embodiments of the present invention may be implemented by a program instructing relevant hardware. The program may be stored in a computer readable storage medium. When the program is run, the steps in the foregoing method embodiments are performed. The storage medium includes various mediums capable of storing program codes, such as a ROM, a RAM, a magnetic disk, or an optical disk.

Finally, it should be noted that the foregoing embodiments are merely intended for describing the technical solutions of the present invention rather than limiting the present invention. Although the present invention is described in detail with reference to the foregoing embodiments, persons of ordinary skill in the art should understood that they may still make modifications to the technical solutions described in the foregoing embodiments, or make equivalent replacements to some technical features of the technical solutions, as long as these modifications and equivalent replacements do not cause the essence of corresponding technical solutions to depart from the scope of the technical solutions in the embodiments of the present invention.

## Claims

1. A method for assigning a public network address, comprising:
receiving a first request packet sent by a private network user equipment, wherein the first request packet is used to establish a connection between the private network user equipment and a network equipment that is on a public network;
assigning a first public network IP address to the private network user equipment from a public network address pool when it is determined that no public network Internet Protocol IP address is assigned to the private network user equipment, wherein ports are corresponding to the first public network IP address are classified into a first port set and a second port set, the second port set comprises at least one port, and an idle port exists in the first port set that is corresponding to the first public network IP address; and assigning a first idle port set to the private network user equipment from the idle port in the first port set that is corresponding to the first public network IP address, wherein the first idle port set comprises at least one port; and
when it is determined that all ports in the first idle port set are occupied and an idle port exists in the second port set that is corresponding to the first public network IP address, assigning a second idle port set to the private network user equipment from the idle port in the second port set that is corresponding to the first public network IP address, wherein the second idle port set comprises at least one port.

2. The method according to claim 1, before it is determined that all ports in the first idle port set are occupied, further comprising:
receiving a second request packet sent by the private network user equipment and triggering detection on occupancy conditions of all ports in the first idle port set, wherein the second request packet is used to establish a connection between the private network user equipment and the network equipment that is on the public network; or
starting a detection timer, and when the detection timer expires, triggering detection on occupancy conditions of all ports in the first idle port set.

3. The method according to claim 1 or claim 2, further comprising:
assigning a third public network IP address to the private network user equipment when it is determined that no public network IP address is assigned to the private network user equipment, and a second public network IP address does not exist in the public network address pool, ports that is corresponding to the second public network IP address are classified into a first port set and a second port set, and an idle port exists in the first port set that is corresponding to the second public network IP address, wherein ports that are corresponding to the third public network IP address are classified into a first port set and a second port set, and an idle port exists in the second port set that is corresponding to the third public network IP address; and assigning a third idle port set to the private network user equipment from an idle port in the second port set that is corresponding to the third public network IP address, wherein the third idle port set comprises at least one port.

4. The method according to any one of claims 1 to 3, further comprising:
receiving an offline notification message sent by the private network user equipment, and reclaiming the first idle port set and the second idle port set; or
reclaiming the first idle port set and the second idle port set if no packet sent by the private network user equipment is received within a preset time threshold; or
reclaiming the first idle port set and the second idle port set if no packet sent by a public network equipment to the private network user equipment is received within a preset time threshold.

5. The method according to any one of claims 1 to 4, further comprising:
reclaiming the second idle port set when no port in the second idle port set is occupied.

6. A method for assigning a public network address, comprising:
receiving a first request packet sent by a private network user equipment, wherein the first request packet is used to establish a connection between the private network user equipment and a network equipment that is on a public network;
assigning a first public network IP address to the private network user equipment from a public network address pool when it is determined that no public network Internet Protocol IP address is assigned to the private network user equipment; assigning a first idle port set to the private network user equipment from an idle port that is corresponding to the first public network IP address, wherein the first idle port set comprises at least one port; and saving all ports in the first idle port set to a first port set that is corresponding to the first public network IP address and the number of ports in the first port set is not greater than a first threshold value; and
assigning a second idle port set to the private network user equipment when it is determined that all ports saved from the first idle port set to the first port set are occupied and an idle port exists among ports that are corresponding to the first public network IP address, wherein the second idle port set comprises at least one port; and saving the port in the second idle port set to a second port set that is corresponding to the first public network IP address, the number of ports in the second port set is not greater than a second threshold value, and a sum of the first threshold value and the second threshold value is not greater than the number of all ports that are corresponding to the first public network IP address.

7. The method according to claim 6, before it is determined that all ports saved from the first idle port set to the first port set are occupied, further comprising:
receiving a second request packet sent by the private network user equipment and triggering detection on occupancy conditions of all ports saved from the first idle port set to the first port set, wherein the second request packet is used to establish a connection between the private network user equipment and the network equipment that is on the public network; or
starting a detection timer, and when the detection timer expires, triggering detection on occupancy conditions of all ports saved from the first idle port set to the first port set.

8. The method according to claim 6 or claim 7, further comprising:
assigning a third public network IP address to the private network when it is determined that no public network IP address is assigned to the private network user equipment, a second public network IP address does not exist in the public network address pool, and the number of ports in a first port set that is corresponding to the second public network IP address is smaller than a third threshold value; assigning a third idle port set to the private network user equipment from an idle port that is corresponding to the third public network IP address, wherein the third idle port set comprises at least one port; and saving the port in the third idle port set to a second port set that is corresponding to the third public network IP address and the number of ports in the second port set is not greater than a fourth threshold value.

9. The method according to any one of claims 6 to 8, further comprising:
receiving an offline notification message sent by the private network user equipment and reclaiming a port saved from the first idle port set to the first port set that is corresponding to the first public network IP address and reclaiming a port saved from the second idle port set to the second port set that is corresponding to the first public network IP address; or
if no packet sent by the private network user equipment is received within a preset time threshold, reclaiming a port saved from the first idle port set to the first port set that is corresponding to the first public network IP address, and reclaiming a port saved from the second idle port set to the second port set that is corresponding to the first public network IP address; or
if no packet sent by a public network equipment to the private network user equipment is received within a preset time threshold, reclaiming a port saved from the first idle port set to the first port set that is corresponding to the first public network IP address, and reclaiming a port saved from the second idle port set to the second port set that is corresponding to the first public network IP address.

10. The method according to any one of claims 6 to 9, further comprising:
when a port saved from the second idle port set to the second port set that is corresponding to the first public network IP address is not occupied, reclaiming the port saved from the second idle port set to the second port set that is corresponding to the first public network IP address.

11. An apparatus for assigning a public network address, comprising:
a first receiving unit, configured to receive a first request packet sent by a private network user equipment, wherein the first request packet is used to establish a connection between the private network user equipment and a network equipment that is on a public network;
a first assigning unit, configured to assign a first public network Internet Protocol IP address to the private network user equipment from a public network address pool when it is determined that no public network IP address is assigned to the private network user equipment, wherein ports that are corresponding to the first public network IP address are classified into a first port set and a second port set, the second port set comprises at least one port, and an idle port exists in the first port set that is corresponding to the first public network IP address; and assign a first idle port set to the private network user equipment from the idle port in the first port set that is corresponding to the first public network IP address, wherein the first idle port set comprises at least one port; and
a second assigning unit, configured to, when it is determined that all ports in the first idle port set are occupied and an idle port exists in the second port set that is corresponding to the first public network IP address, assign a second idle port set to the private network user equipment from the idle port in the second port set that is corresponding to the first public network IP address, wherein the second idle port set comprises at least one port.

12. The apparatus according to claim 11, further comprising:
a second receiving unit, configured to receive a second request packet sent by the private network user equipment and trigger detection on occupancy conditions of all ports in the first idle port set, wherein the second request packet is used to establish a connection between the private network user equipment and the network equipment that is on the public network; or
a first starting and triggering unit, configured to start a detection timer, and when the detection timer expires, trigger detection on occupancy conditions of all ports in the first idle port set.

13. The apparatus according to claim 11 or claim 12, further comprising:
a third assigning unit, configured to assign a third public network IP address to the private network user equipment when it is determined that no public network IP address is assigned to the private network user equipment, and a second public network IP address does not exist in the public network address pool, ports that are corresponding to the second public network IP address are classified into a first port set and a second port set, and an idle port exists in the first port set that is corresponding to the second public network IP address, wherein ports that are corresponding to the third public network IP address are classified into a first port set and a second port set, and an idle port exists in the second port set that is corresponding to the third public network IP address; and assign a third idle port set to the private network user equipment from an idle port in the second port set that is corresponding to the third public network IP address, wherein the third idle port set comprises at least one port.

14. The apparatus according to any one of claims 11 to 13, further comprising:
a first reclaiming unit, configured to receive an offline notification message sent by the private network user equipment, and reclaim the first idle port set and the second idle port set;
a second reclaiming, configured to reclaim the first idle port set and the second idle port set if no packet sent by the private network user equipment is received within a preset time threshold; or
a third reclaiming unit, configured to reclaim the first idle port set and the second idle port set if no packet sent by a public network equipment to the private network user equipment is received within a preset time threshold.

15. The apparatus according to any one of claims 11 to 14, further comprising:
a fourth reclaiming unit, configured to reclaim the second idle port set when no port in the second idle port set is occupied.

16. An apparatus for assigning a public network address, comprising:
a third receiving unit, configured to receive a first request packet sent by a private network user equipment, wherein the first request packet is used to establish a connection between the private network user equipment and a network equipment that is on a public network;
a fourth assigning unit, configured to assign a first public network Internet Protocol IP address to the private network user equipment from a public network address pool when it is determined that no public network IP address is assigned to the private network user equipment; assign a first idle port set to the private network user equipment from an idle port that is corresponding to the first public network IP address, wherein the first idle port set comprises at least one port; and save the port in the first idle port set to a first port set that is corresponding to the first public network IP address and the number of ports in the first port set is not greater than a first threshold value; and
a fifth assigning unit, configured to assign a second idle port set to the private network user equipment when it is determined that all ports saved from the first idle port set to the first port set are occupied and an idle port exists among ports that are corresponding to the first public network IP address, wherein the second idle port set comprises at least one port; and save the port in the second idle port set to a second port set that is corresponding to the first public network IP address, the number of ports in the second port set is not greater than a second threshold value, and a sum of the first threshold value and the second threshold value is not greater than the number of all ports that are corresponding to the first public network IP address.

17. The apparatus according to claim 16, wherein the apparatus for assigning a public network address, further comprising:
a fourth receiving unit, configured to receive a second request packet sent by the private network user equipment and trigger detection on occupancy conditions of all ports saved from the first idle port set to the first port set, wherein the second request packet is used to establish a connection between the private network user equipment and the network equipment that is on the public network; or
a second starting and triggering unit, configured to start a detection timer, and when the detection timer expires, trigger detection on occupancy conditions of all ports saved from the first idle port set to the first port set.

18. The apparatus according to claim 16 or claim 17, further comprising:
a sixth assigning unit, configured to assign a third public network IP address to the private network when it is determined that no public network IP address is assigned to the private network user equipment, a second public network IP address does not exist in the public network address pool, and the number of ports in a first port set that is corresponding to the second public network IP address is smaller than a third threshold value; assign a third idle port set to the private network user equipment from an idle port that is corresponding to the third public network IP address, wherein the third idle port set comprises at least one port; and save the port in the third idle port set to a second port set that is corresponding to the third public network IP address and the number of ports in the second port set is not greater than a fourth threshold value.

19. The apparatus according to any one of claims 16 to 18, further comprising:
a fifth reclaiming unit, configured to receive an offline notification message sent by the private network user equipment and reclaim a port saved from the first idle port set to the first port set that is corresponding to the first public network IP address and reclaim a port saved from the second idle port set to the second port set that is corresponding to the first public network IP address; or
a sixth reclaiming unit, configured to, if no packet sent by the private network user equipment is received within a preset time threshold, reclaim a port saved from the first idle port set to the first port set that is corresponding to the first public network IP address, and reclaim a port saved from the second idle port set to the second port set that is corresponding to the first public network IP address; or
a seventh reclaiming unit, configured to, if no packet sent by a public network equipment to the private network user equipment is received within a preset time threshold, reclaim a port saved from the first idle port set to the first port set that is corresponding to the first public network IP address, and reclaim a port saved from the second idle port set to the second port set that is corresponding to the first public network IP address.

20. The apparatus according to any one of claims 16 to 19, further comprising:
an eighth reclaiming unit, configured to, when a port saved from the second idle port set to the second port set that is corresponding to the first public network IP address is not occupied, reclaim the port saved from the second idle port set to the second port set that is corresponding to the first public network IP address.
